# EUROPEAN PATENT SPECIFICATION

(11) **EP 2 824 974 B1**
(45) Date of publication and mention of the grant of the patent: **02.05.2018**
(21) Application number: 14176772.3
(22) Date of filing: 11.07.2014
(51) Int. Cl.: H04W 52/02

(54) **COMMUNICATION APPARATUS, CONTROL METHOD, COMPUTER PROGRAM, AND STORAGE MEDIUM**
KOMMUNIKATIONSVORRICHTUNG, STEUERVERFAHREN, COMPUTERPROGRAMM UND SPEICHERMEDIUM
APPAREIL DE COMMUNICATION, PROCÉDÉ DE COMMANDE, PROGRAMME INFORMATIQUE ET SUPPORT DE STOCKAGE

(30) Priority: 12.07.2013 JP 2013147076
(43) Date of publication of application: 14.01.2015
(73) Proprietor: CANON KABUSHIKI KAISHA, Ohta-ku Tokyo 146-8501 (JP)
(72) Inventor: Amano, Ryosuke, Ohta-ku, Tokyo (JP)
(74) Representative: Williamson, Brian

(56) References cited:
- EP-A1- 1 458 137
- WO-A1-2009/032522
- US-A1- 2011 275 316
- US-B1- 8 271 662

## Description

The present invention relates to power control of an apparatus.

Recently, close proximity wireless communication techniques such as NFC (Near Field Communication), IrDA (Infrared Data Association), and TransferJet™ have been adopted for smartphones and the like. In these close proximity wireless communication techniques, users can transmit or receive image data, address data, or the like between two smartphones by only performing an operation of, for example, bringing the cellular phones close to each other (see Japanese Patent Laid-Open No. 2007-221355).

Also, in the NFC Forum, a protocol for handover from NFC to different wireless communication systems such as Wi-Fi (Wireless Fidelity) and Bluetooth™ is standardized. By implementing the handover from NFC to other communication systems, large-volume data can be exchanged by establishing high-speed channels such as Wi-Fi and Bluetooth by only bringing two smartphones near each other (see Japanese Patent Laid-Open Nos. 2009-207069 and 2011-182449).

US 8,271,662 discusses techniques for receiving, by a first computing device, information from a second computing device communicated using short-range wireless communication functionality. Responsive to receiving the information, activating, by the first computing device, a secondary communication functionality that is different from the short-range wireless communication functionality. A communication session may be established between the first computing device and the second computing device using the secondary communication functionality.

An electronic device incorporating an electronic tag of NFC has also been made into a product, and a function of executing handover to Wi-Fi by holding a smartphone including a reader/writer over this electronic device has been implemented. In addition, a function of automatically powering on an unpowered electronic device by holding a smartphone over the electronic device and detecting an induced electromotive force from a reader/writer by a tag has been implemented.

An electronic tag of NFC can operate by only an induced electromotive force from a reader/writer. To only read information stored in an internal memory of an electronic tag, it is unnecessary to power on the main body of an electronic device incorporating the electronic tag. However, an electronic device which unconditionally powers on the main body when triggered by NFC powers on the main body even when a smartphone is brought near the electronic device in order to read information stored in the electronic tag. Consequently, useless power consumption occurs in the electronic device.

The present invention has been made in consideration of the above problem, and provides an activation control technique of decreasing the frequency at which a portion other than a close proximity wireless function of an electronic device is activated.

The present invention in its first aspect provides a communication apparatus as specified in claims 1 to 7.

The present invention in its second aspect provides a control method as specified in claim 8.

The present invention in its third aspect provides a computer program as specified in claim 9.

The present invention in its fourth aspect provides a storage medium as specified in claim 10.

Further features of the present invention will become apparent from the following description of illustrative embodiments (with reference to the attached drawings).

The accompanying drawings, which are incorporated in and constitute a part of the specification, illustrate embodiments of the invention, and together with the description, serve to explain the principles of the invention.
Fig. 1 is a schematic view showing a configuration example of a wireless communication system;
Fig. 2 is a block diagram showing a configuration example of a cellular phone;
Fig. 3 is a block diagram showing a configuration example of a digital camera;
Fig. 4 is a sequence chart showing an example of processing performed by the cellular phone and digital camera;
Fig. 5 is a flowchart showing an example of processing of the cellular phone; and
Fig. 6 is a view showing an example of a screen display for prompting the user to confirm whether to connect to a partner apparatus.

Illustrative embodiment(s) of the present invention will now be described in detail with reference to the drawings. It should be noted that the relative arrangement of the components, the numerical expressions and numerical values set forth in these embodiments do not limit the scope of the present invention unless it is specifically stated otherwise.

### (System Configuration)

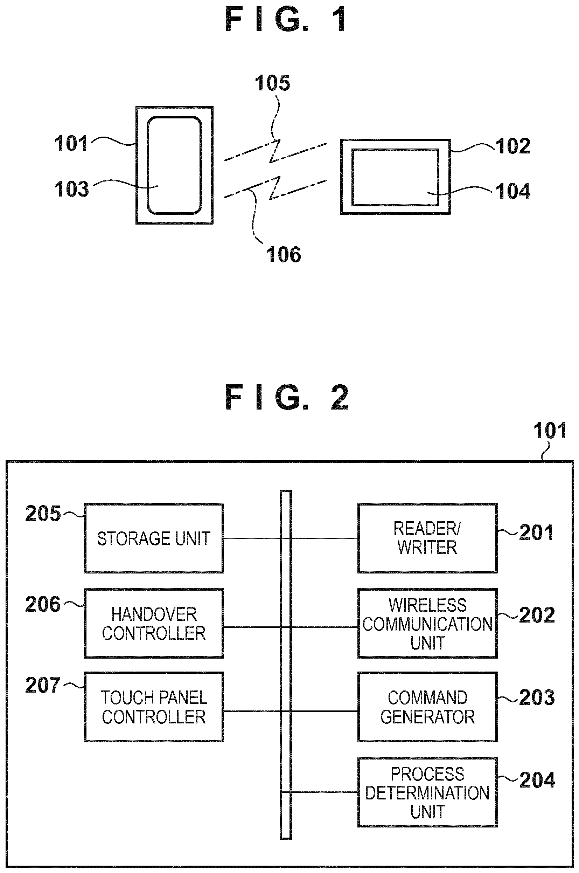

Fig. 1 is a schematic view showing the configuration of a wireless communication system according to this embodiment. This wireless communication system includes a communication apparatus or control apparatus such as a cellular phone 101 and an electronic device or another communication apparatus such as a digital camera 102. The cellular phone 101 includes a touch panel 103 for, for example, displaying information to the user and accepting operations, and the digital camera 102 also includes a touch panel 104. Note that control between the cellular phone 101 and digital camera 102 will be explained below, but the same explanation is similarly applicable to other electronic devices capable of close proximity wireless communication.

The cellular phone 101 and digital camera 102 has a close proximity wireless communication function as a first communication function. For example, the cellular phone 101 can perform close proximity wireless communication 105 with the digital camera 102 as a communication partner apparatus by being in close proximity to the digital camera 102. The close proximity wireless communication 105 is, for example, non-contact IC card wireless communication using electromagnetic induction, NFC (Near Field Communication), or communication using an induced electric field. The close proximity wireless communication 105 has a maximum communication rate of a few hundred kbps, and a range for communication of a few cm.

In these communication systems, communication can be performed between a reader/writer of the cellular phone 101 and a tag of the digital camera 102, and the reader/writer can perform read and write on an internal memory area of the tag. More specifically, when performing a read operation, the reader/writer transmits a read command to the tag, and the tag transmits a read response containing data stored in the internal memory to the reader/writer. Also, when performing a write operation, the reader/writer transmits, to the tag, a write command containing data to be written in the internal memory of the tag, and the tag transmits a write response containing the success or failure of the write to the internal memory to the reader/writer.

In this operation, the reader/writer can directly supply electric power to the tag by the signal it transmits, or can supply electric power by an induced electromotive force. The tag can operate by using the electric power supplied from the reader/writer, or the induced electromotive force supplied by the received signal. Note that the tag can also operate by using power supplied by the electronic device incorporating the tag. The reader/writer can receive and read the data stored in the internal memory of the tag, or can transmit a predetermined signal to the tag and write the transmitted data in the memory as needed.

The cellular phone 101 and digital camera 102 have a wireless communication function such as a wireless LAN complying with the IEEE802.11 series and Bluetooth as a second communication function. For example, the cellular phone 101 can perform wireless communication 106 with the digital camera 102 as a communication partner apparatus either directly or via a relay device such as an AP (Access Point). The wireless communication 106 has a maximum communication rate of a few hundred Mbps and a communication range of a few tens of meters. When starting communication by the wireless communication 106, protected communication can be performed by performing encryption and authentication by setting wireless parameters such as an encryption method, encryption key, authentication method, and authentication key. This processing is performed based on, for example, WPA (Wi-Fi Protected Access) standardized by the Wi-Fi alliance. Note that it is also possible to perform encryption and authentication by using another method, or perform neither encryption nor authentication.

In this embodiment, the cellular phone 101 and digital camera 102 perform communication by the first communication function. After that, the cellular phone 101 determines whether to activate the second function (for example, the second communication function) other than the first communication function of the digital camera 102. More specifically, the reader/writer of the cellular phone 101 reads out, from the tag of the digital camera 102, information stored in the tag, and acquires the information. Then, if the acquired information is information for identifying the digital camera 102, the cellular phone 101 determines whether to activate the second function of the digital camera 102 in accordance with, for example, whether the identification information is stored in an internal storage unit of the cellular phone 101. If it is determined that the second function of the digital camera 102 is to be activated, the cellular phone 101 transmits a function activation command to the digital camera 102 by the first communication function. When receiving the second function activation command via the first communication function, the digital camera 102 activates the second function.

Consequently, the cellular phone 101 can control the activation of a function other than the first communication function of the digital camera 102 based on the information acquired by the first communication function. This makes it possible to prevent unnecessary activation of a second function of the digital camera 102. As a result, the power consumption of the digital camera 102 can be minimized.

The arrangements and operations of the cellular phone 101 and digital camera 102 will be explained in detail below. Note that a case in which the cellular phone 101 controls the activation of the second function of the digital camera 102 will be explained below, but the digital camera 102 may also activate a function other than the close proximity wireless communication function of the cellular phone 101. Also, the cellular phone 101 or digital camera 102 may control the activation of a function other than the close proximity wireless communication function of another electronic device, or another electronic device may control the activation of a function other than the close proximity wireless communication function of the cellular phone 101 or digital camera 102. Furthermore, communication which triggers this activation control may also be communication other than the close proximity wireless communication. That is, an electronic device for performing the activation control can be any apparatus as long as it receives predetermined data from a partner apparatus and controls the activation of a predetermined function of the partner apparatus in accordance with the received data.

### (Arrangement of Cellular Phone 101)

The arrangement of the cellular phone 101 will be explained below. Fig. 2 is a block diagram showing a configuration example of the cellular phone 101. Each functional block shown in Fig. 2 is implemented by, for example, a CPU (Central Processing Unit) of the cellular phone 101 by executing a program stored in the memory. Alternatively, dedicated hardware for executing each functional block may exist in the cellular phone 101. It is also possible to implement some functional blocks by executing programs by the CPU, and implement other functional blocks by using dedicated hardware.

The cellular phone 101 includes, for example, a reader/writer 201, wireless communication unit 202, command generator 203, process determination unit 204, storage unit 205, handover controller 206, and touch panel controller 207.

The reader/writer 201 performs at least one of an operation of acquiring information from the tag of the digital camera 102 or the like by reading out the information, and an operation of writing data to the tag, by the close proximity wireless communication 105. The reader/writer 201 periodically transmits a polling command and receives a polling response when a tag is within the communication range, thereby detecting a device including the communicable tag. The reader/writer 201 can transmit a read command, a write command, and other predetermined commands to the tag. The command generator 203 generates these commands.

The wireless communication unit 202 is a functional unit for performing the wireless communication 106. The wireless communication unit 202 establishes wireless connection to a communicable apparatus existing within a communication range by designating the apparatus or by being designated by the apparatus.

The command generator 203 generates commands to be transmitted to a tag by the reader/writer 201. In this embodiment, the command generator 203 generates a host activation command in addition to the read command and write command described above. The host activation command is a command for activating the host CPU of the digital camera 102. Note that the host activation command and write command are defined as different commands in this embodiment, but the write command may also be used as the host activation command. In this case, the host CPU of the digital camera 102 is activated by transmitting the write command. An operation of activating the host CPU in the digital camera 102 when using the host activation command will be described later.

The process determination unit 204 determines a process to be executed between the cellular phone 101 and digital camera 102 by application software. An example of the process to be executed by application software is a process of acquiring an image from the digital camera 102 by the wireless communication 106. Another example when data is saved on the Internet is a process of reading a URL (Uniform Resource Locator) indicating the save location of an image from a tag by the close proximity wireless communication 105, and acquiring the image data from the Internet. Access to the Internet can be performed by using a cellular network such as a 3G channel or LTE (Long Term Evolution), or a communication function such as the wireless communication 106 via a wireless LAN router. Thus, the process determination unit 204 determines a process to be executed in accordance with, for example, information stored in a tag read by the reader/writer 201.

The tag stores at least one of the device ID of the digital camera 102, the activation state of the CPU, the supportability to the host activation command, information indicating the battery status such as the remaining amount of the battery, identification information of processing provided by the digital camera 102, and setting information of wireless parameters. When performing the process of acquiring image data from the Internet, a URL indicating the save location of the image may also be stored in the tag. It is also possible to store information other than those described above in the tag. Note that the description form of the identification information of processing provided by the digital camera 102 may comply with a URI (Uniform Resource Identifier) defined by RFC3986.

The storage unit 205 is a storage area for storing various kinds of data. In this embodiment, the storage unit 205 stores the device ID among other pieces of information stored in the tag read by the reader/writer 201. However, the storage unit 205 may also store information other than the device ID.

The handover controller 206 performs control for starting connection of the wireless communication 106 by using wireless parameters read by the reader/writer 201. When using Wi-Fi as the wireless communication 106, the handover controller 206 executes processing complying with the specifications of Out-of-Band Interface of WSC (Wi-Fi Simple Configuration) standardized by the Wi-Fi alliance.

The touch panel controller 207 controls the touch panel 103 of the cellular phone 101. The touch panel controller 207 has a function of controlling the screen display of the touch panel 103, and a function of detecting an operation performed on the touch panel 103 by the user. Note that a touch panel is used to display information and accept a user's operations in this embodiment, but the cellular phone 101 may also have a display function and operation accepting function different from a touch panel, for example, a display and hardware buttons.

### (Arrangement of Digital Camera 102)

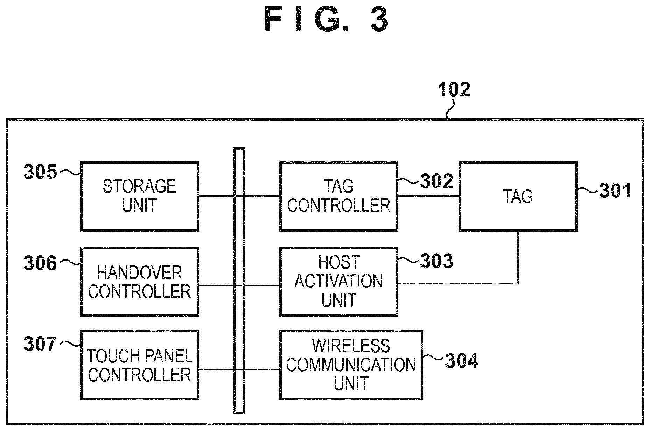

The arrangement of the digital camera 102 will now be explained. Fig. 3 is a block diagram showing a configuration example of the digital camera 102. The digital camera 102 includes, for example, a tag 301, tag controller 302, host activation unit 303, wireless communication unit 304, storage unit 305, handover controller 306, and touch panel controller 307.

The tag 301 executes processing corresponding to read and write operations from the reader/writer 201 of the cellular phone 101 by the close proximity wireless communication 105. The tag 301 includes an internal memory and can perform data read and write on this memory in accordance with an operation from at least one of the tag controller 302 and reader/writer 201. In addition, the tag 301 includes a dedicated CPU (to be referred to as a tag dedicated CPU hereinafter), and can operate by power supplied by the digital camera 102 or the induced electromotive force of the reader/writer 201. Accordingly, even when a CPU (to be referred to as a main CPU hereinafter) of the digital camera 102 is not operating, the tag 301 can establish the close proximity wireless communication 105 with the reader/writer 201 of the cellular phone 101. Furthermore, the tag 301 has a function of transmitting an interrupt signal to the host activation unit 303 when receiving the host activation command from the reader/writer 201.

Each of the following functional blocks shown in Fig. 3 is implemented by, for example, the main CPU of the digital camera 102 by executing a program stored in the memory. Alternatively, dedicated hardware for executing each functional block may exist in the digital camera 102. It is also possible to implement some functional blocks by executing programs by the main CPU, and implement other functional blocks by using dedicated hardware.

The tag controller 302 controls a read/write operation to the internal memory of the tag 301. The host activation unit 303 activates the CPU of the digital camera 102 when receiving the interrupt signal from the tag 301 while the CPU of the digital camera 102 is halting.

The wireless communication unit 304, storage unit 305, handover controller 306, and touch panel controller 307 are respectively the same as the wireless communication unit 202, storage unit 205, handover controller 206, and touch panel controller 207 of the cellular phone 101, so a repeated explanation has been omitted.

### (Operation of System)

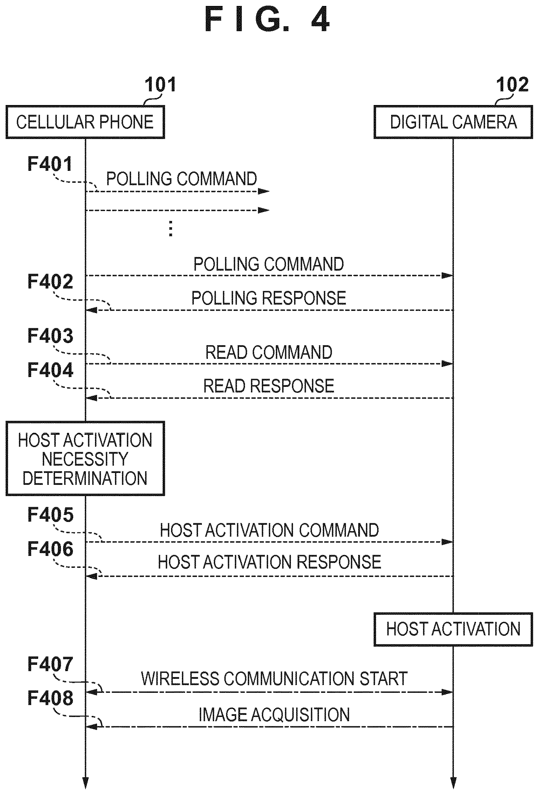

Fig. 4 is a sequence chart showing processing executed by the cellular phone 101 and digital camera 102 in the system of this embodiment. A case in which the cellular phone 101 controls the activation of a function other than the close proximity wireless communication function of the digital camera 102 will be explained below. Note that in the following description, a case in which the cellular phone 101 performs activation control and a wireless communication function different from the close proximity wireless communication function is activated and performs communication faster than close proximity wireless communication will be explained. However, it is unnecessary to activate any high-speed wireless communication function. For example, when executing a predetermined application using low-speed wireless communication equivalent to close proximity wireless communication, a function for executing the application is activated, but no high-speed wireless communication function need be activated.

First, in the initial state, the cellular phone 101 and digital camera 102 are arranged at a distance outside of the range for which communication by the close proximity wireless communication 105 can take place. In this state, the reader/writer 201 of the cellular phone 101 periodically transmits a polling command for detecting arbitrary tags including the tag 301 of the digital camera 102 (step F401). Assume that the user brings the cellular phone 101 and digital camera 102 closer to each other such that they enter into a range where communication can take place.

When the cellular phone 101 and digital camera 102 enter the communication range, the reader/writer 201 of the cellular phone 101 receives a response to a polling command from the tag 301 of the digital camera 102 (step F402). Consequently, the cellular phone 101 detects the digital camera 102. Then, the cellular phone 101 transmits a read command to the detected digital camera 102 (step F403), and acquires memory data in the tag 301 of the digital camera 102 (step F404).

Based on the acquired memory data, the cellular phone 101 determines whether it is necessary to transmit the host activation command, that is, whether it is necessary to activate a function other than the close proximity wireless communication function of the digital camera 102. If it is determined that the transmission of the host activation command is necessary, the cellular phone 101 transmits the host activation command to the digital camera 102 via the tag 301 (step F405).

Upon receiving the host activation command via the tag 301, the digital camera 102 transmits a response to the host activation command (step F406), and activates the main CPU. Note that the response may also be transmitted after or in parallel with the activation of the main CPU.

When the activation of the main CPU of the digital camera 102 is completed, the cellular phone 101 and digital camera 102 establish the connection of the wireless communication 106 faster than the close proximity wireless communication 105 (step F407). After that, application software in the digital camera 102 executes processing, for example, acquires an image and transfers the acquired image to the cellular phone 101 by the wireless communication 106 (step F408).

### (Processing of Cellular Phone)

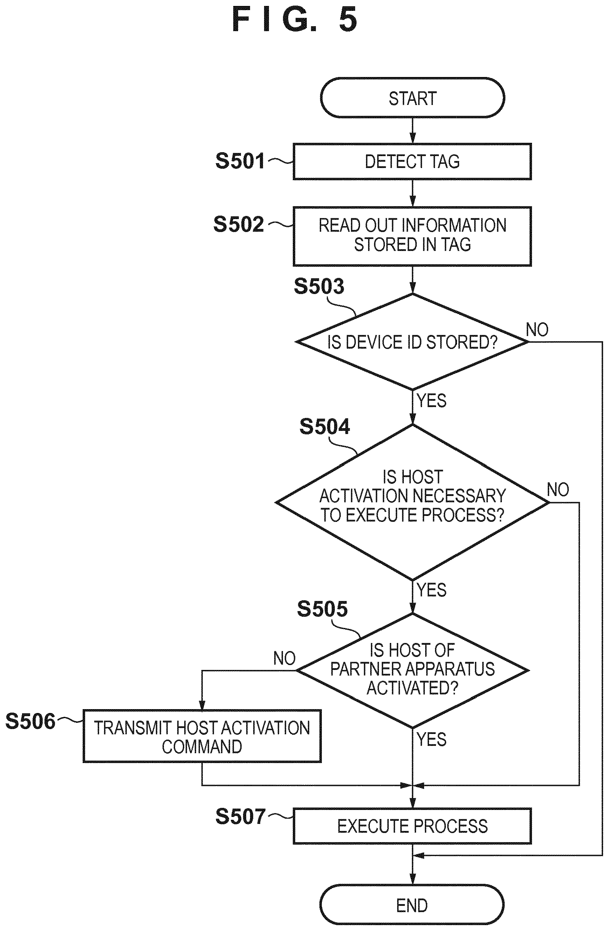

Next, processing executed by the cellular phone 101 as a device which performs activation control will be explained. Fig. 5 is a flowchart showing an example of the processing executed by the cellular phone 101. Note that in this embodiment, the cellular phone 101 has not started any communication with another device by the close proximity wireless communication 105 in the initial state.

In this state, the reader/writer 201 detects the tag 301 (step S501), and reads memory data stored in the tag 301 (step S502). This data contains, for example, the device ID (identification information) of the digital camera 102, the activation state of the main CPU, the feasibility of response to the host activation command, information indicating the battery remaining amount, information of processing provided by the digital camera 102, and setting information of wireless parameters. Note that the data may also contain at least one of these pieces of information.

Subsequently, the process determination unit 204 determines whether the device ID of the digital camera 102 is stored in the storage unit 205 (step S503). If the device ID of the digital camera 102 is not stored (NO in step S503), the cellular phone 101 terminates the process. That is, the main CPU is not activated for an electronic device having an unregistered device ID. This makes it possible to prevent unnecessary activation of a function other than the close proximity wireless communication function of the partner apparatus.

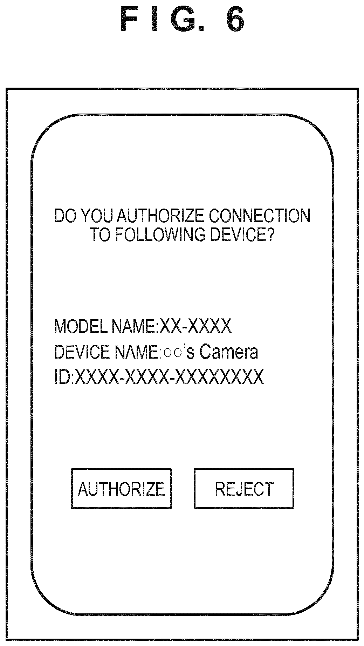

Note that if the device ID of the digital camera 102 is not stored, the cellular phone 101 may also confirm whether to connect to the digital camera 102 to the user by using the touch panel 103 as shown in Fig. 6, and advance to step S504 if authorization is obtained. In addition, if the close proximity wireless communication 105 is disconnected while the cellular phone 101 is waiting for an operation on the touch panel 103, the cellular phone 101 may display the screen for urging the user to perform a close proximity operation again. By displaying the screen for urging the user to perform a close proximity operation again, although it is necessary to input authorization/rejection of connection to the cellular phone 101 by operating the touch panel 103, the user can operate the touch panel 103 without maintaining the close proximity state between the cellular phone 101 and digital camera 102. If authorization is obtained from the user, the cellular phone 101 stores the device ID of the digital camera 102 in the storage unit 305. This makes it possible to omit the operation of inputting authorization/rejection by the user in the close proximity state the next time.

If the device ID of the digital camera 102 is stored (YES in step S503), the process determination unit 204 determines whether the activation of the main CPU of the digital camera 102 is necessary to execute the process provided by the digital camera 102, based on information of the process (step S504).

For example, when executing a process of acquiring an image from the digital camera 102 by the wireless communication 106, the wireless communication 106 is performed using the wireless communication unit 304 of the digital camera 102, so the operation of the main CPU of the digital camera 102 is necessary. On the other hand, when performing a process of acquiring image data from the Internet, the close proximity wireless communication 105 need only be performed in order to refer to the URL of the memory data in the tag 301. Therefore, the operation of only the tag dedicated CPU is necessary, so the activation of the main CPU of the digital camera 102 is unnecessary.

Note that in this embodiment, the necessity of the activation of the main CPU of the digital camera 102 with respect to each process is already known in the cellular phone 101. However, the main data in the tag 301 may also contain information about the necessity of the activation of the main CPU. In this case, the process determination unit 204 of the cellular phone 101 determines the necessity of the activation of the main CPU by referring to the information. The cellular phone 101 may also determine the necessity of the activation of the main CPU in accordance with whether the memory data in the tag 301 contains setting information of wireless parameters. That is, if the memory data contains setting information of wireless parameters, the cellular phone 101 may determine that it is necessary to activate the main CPU in order to establish the wireless connection.

Note that in this embodiment, the necessity of the activation of the main CPU of the digital camera 102 is determined based on information of the process provided by the digital camera 102. However, this may also be determined by another method. For example, it is also possible to determine, in the cellular phone 101, a process to be executed between it and the digital camera 102 before the close proximity wireless communication 105 starts, and determine the necessity of the activation of the main CPU of the digital camera 102 in accordance with the contents of the process.

When, for example, it is necessary to activate the main CPU of the digital camera 102 regardless of a process, it is also possible to store the device ID in the storage unit 205, and allow the cellular phone 101 to execute only the determination in step S503 and omit the determination in step S504. In this case, the cellular phone 101 can activate the main CPU of the digital camera 102 by only confirming that the partner apparatus detected by the reader/writer 201 is the digital camera 102.

If it is determined that the main CPU must be activated to execute the process provided by the digital camera 102 (YES in step S504), the cellular phone 101 confirms the activation state of the main CPU of the digital camera 102 based on the information acquired from the tag 301 (step S505). That is, the cellular phone 101 determines whether the main CPU of the digital camera 102 is already activated. If the main CPU of the digital camera 102 is not activated (NO in step S505), the command generator 203 generates the host activation command, and the reader/writer 201 transmits the command to the tag 301 of the digital camera 102 (step S506).

Note that even when it is determined that the main CPU is not activated (NO in step S505), if the information acquired in step S502 indicates that the battery remaining amount of the digital camera 102 is equal to or smaller than a predetermined amount, the cellular phone 101 may terminate the process without transmitting the host activation command. Also, if the battery remaining amount is equal to or smaller than the predetermined amount, the cellular phone 101 may confirm whether the user authorizes or rejects the activation of the main CPU by using the touch panel 103. If the user rejects, the cellular phone 101 may terminate the process without transmitting the host activation command. Since, therefore, no host activation command is transmitted when the battery remaining amount is small, it is possible to prevent the battery remaining amount of the digital camera 102 from being reduced by the influence of the power consumption caused by the activation of the main CPU and by wireless communication other than the close proximity wireless communication. Consequently, it is possible to avoid the digital camera 102 from becoming inoperable due to an insufficient battery remaining amount, thereby improving the user friendliness.

Also, if the information acquired in step S502 indicates that the digital camera 102 does not support the host activation command, the cellular phone 101 may terminate the process without transmitting the host activation command. Consequently, in a situation in which a tag supporting the host activation command and a tag not supporting it coexist, if the tag of a partner apparatus does not support the command, the transmission of a command unknown to the partner apparatus can be prevented.

When activated in step S506, the main CPU of the digital camera 102 executes the process between the cellular phone 101 and digital camera 102 (step S507). On the other hand, if the activation of the main CPU of the digital camera 102 is unnecessary for the process to be executed (NO in step S504), or if the main CPU of the digital camera 102 is already activated (YES in step S505), the process is executed without activating the main CPU (step S507). In this case, in the digital camera 102, the main CPU is not activated, and only the functional unit for the close proximity wireless communication executes the process. This can reduce unnecessary power consumption.

Note that the example in which the main CPU executes all functions other than the close proximity wireless communication has been explained above. However, it is also possible to specify a portion to be activated for each function in the digital camera 102, and activate only the portion. That is, in an operation of transferring an already captured image, for example, it is possible to activate only a predetermined function for image transfer, for example, a high-speed communication function, without activating a function for image capturing. In this case, a function to be activated may also be determined by a command received from the cellular phone 101 via the tag.

In this embodiment as described above, a device which performs activation control acquires predetermined information from a device as a target of activation control by close proximity wireless communication, and determines whether to activate a function other than close proximity wireless communication in accordance with the information. Consequently, the activation of an unnecessary function can be prevented in the device as a target of activation control.

Especially in the embodiment, whether to activate a predetermined function (for example, the main CPU) of the device as a target of activation control is determined in accordance with a process to be executed between the device which performs activation control and the device as a target of activation control. Only for a request by the process, therefore, a portion of an electronic device, which is used in the function, can be activated. This makes it possible to reduce the power consumption by a necessary amount in the device as a target of activation control.

It is also possible to prevent handover to wireless communication other than close proximity wireless communication by unconditionally activating the main CPU of a partner apparatus in close proximity. Consequently, the power consumption of wireless communication of the handover destination can be reduced. Furthermore, since unconditional handover to wireless communication other than close proximity wireless communication is not performed for the partner apparatus in close proximity, unintended connection to an apparatus not authorized by the user can be avoided.

In addition, when, for example, the close proximity wireless communication function of an apparatus as a target of activation control can operate by electric power directly supplied by a signal from a partner apparatus or electric power supplied by an induced electromotive force, the power consumption can be reduced until a function which operates by electric power from an internal power supply is activated. That is, in this case, it is possible to exchange information necessary for activation control for the partner apparatus and receive a command from the partner apparatus by using electric power supplied by the signal from the partner apparatus. As a consequence, the power consumption can largely be reduced until a function using the internal power supply is activated.

The present invention can decrease the frequency at which a portion other than a close proximity wireless communication function of an electronic device is activated.

Further embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

## Claims

1. A communication apparatus (101), comprising:
acquiring means (201) configured to acquire information from another communication apparatus (102) using wireless communication means, wherein the acquired information contains information that is set based on a remaining amount of an internal battery of said another communication apparatus;
determining means (204) configured to determine whether to activate a specified communication function of said another communication apparatus based on the acquired information; and
transmitting means (203) configured to transmit, using the wireless communication means, a command to activate the specified communication function according to a determination of the determining means.

2. The communication apparatus according to claim 1, wherein
the acquired information contains identification information for identifying said another communication apparatus, and
said determining means is configured to determine whether to activate the specified communication function in accordance with whether the acquired identification information was previously stored in a storage means (205).

3. The communication apparatus according to claim 2, further comprising confirming means (207) arranged to receive information from a user of the communication apparatus specifying whether to activate the specified communication function of said another communication apparatus, if the acquired identification information is not stored in said storage means.

4. The communication apparatus according to any one of claims 1 to 3, wherein said determining means is further configured to determine whether to activate the specified communication function based on a process to be executed in cooperation with said another communication apparatus.

5. The communication apparatus according to any one of claims 1 to 4, wherein
the acquired information contains information indicating whether the specified communication function is activated, and
said determining means determines whether to activate the specified communication function, if the specified communication function is not activated.

6. The communication apparatus according to any one of claims 1 to 5, further comprising second communicating means (202) for communicating with said another communication apparatus after the specified communication function is activated,
wherein the second communication means is arranged such that communication is operated via the specified communication function when said communication is faster than via said wireless communication means.

7. A control method of controlling a communication apparatus (101), the method comprising:
acquiring information from another communication apparatus (102) using wireless communication means, wherein the acquired information contains information that is set based on a remaining amount of an internal battery of said another communication apparatus;
determining whether to activate a specified communication function of said another communication apparatus based on the acquired information; and
transmitting using the wireless communication means, a command to activate the specified communication function according to a determination of the determining.

8. A computer program which, when run on a device, causes the device to execute a method according to claim 7.

9. A computer-readable storage medium storing a computer program according to claim 8.

## Patentansprüche

1. Kommunikationsvorrichtung (101), umfassend:
eine Erfassungseinrichtung (201), die konfiguriert ist, unter Verwendung einer Drahtloskommunikationseinrichtung Information von einer anderen Kommunikationsvorrichtung (102) zu erfassen, wobei die erfasste Information auf einem Restwert einer internen Batterie der anderen Kommunikationsvorrichtung basierende Information beinhaltet;
eine Bestimmungseinrichtung (204), die konfiguriert ist, basierend auf der erfassten Information zu bestimmen, ob eine spezifizierte Kommunikationsfunktion der anderen Kommunikationsvorrichtung aktiviert werden soll; und
eine Übertragungseinrichtung (203), die konfiguriert ist, unter Verwendung der Drahtloskommunikationseinrichtung einen Befehl zum Aktivieren der spezifizierten Kommunikationsfunktion gemäß einer Bestimmung der Bestimmungseinrichtung zu übertragen.

2. Kommunikationsvorrichtung nach Anspruch 1, wobei
die erfasste Information Identifizierungsinformation zum Identifizieren der anderen Kommunikationsvorrichtung beinhaltet; und
die Bestimmungseinrichtung konfiguriert ist, zu bestimmen, ob die spezifizierte Kommunikationsfunktion aktiviert werden soll, je nachdem, ob die erfasste Identifizierungsinformation zuvor in einer Speichereinrichtung (205) gespeichert war.

3. Kommunikationsvorrichtung nach Anspruch 2, ferner umfassend eine Bestätigungseinrichtung (207), die ausgelegt ist, Information von einem Anwender der Kommunikationsvorrichtung zu empfangen, die spezifiziert, ob die spezifizierte Kommunikationsfunktion der anderen Kommunikationsvorrichtung aktiviert werden soll, wenn die erfasste Identifizierungsinformation nicht in der Speichereinrichtung gespeichert ist.

4. Kommunikationsvorrichtung nach einem der Ansprüche 1 bis 3, wobei die Bestimmungseinrichtung ferner konfiguriert ist, basierend auf einem in Zusammenarbeit mit der anderen Kommunikationsvorrichtung auszuführenden Prozess zu bestimmen, ob die spezifizierte Kommunikationsfunktion aktiviert werden soll.

5. Kommunikationsvorrichtung nach einem der Ansprüche 1 bis 4, wobei
die erfasste Information Information beinhaltet, die angibt, ob die spezifizierte Kommunikationsfunktion aktiviert ist, und
die Bestimmungseinrichtung bestimmt, ob die spezifizierte Kommunikationsfunktion aktiviert werden soll, falls die spezifizierte Kommunikationsfunktion nicht aktiviert ist.

6. Kommunikationsvorrichtung nach einem der Ansprüche 1 bis 5, ferner umfassend eine zweite Kommunikationseinrichtung (202) zum Kommunizieren mit der anderen Kommunikationsvorrichtung nach Aktivieren der spezifizierten Kommunikationsfunktion,
wobei die zweite Kommunikationseinrichtung so ausgelegt ist, dass Kommunikation über die spezifizierte Kommunikationsfunktion betrieben wird, wenn die Kommunikation schneller ist als über die Drahtloskommunikationseinrichtung .

7. Steuerungsverfahren zum Steuern einer Kommunikationsvorrichtung (101), wobei das Verfahren umfasst:
Erfassen von Information von einer anderen Kommunikationsvorrichtung (102) unter Verwendung einer Drahtloskommunikationseinrichtung, wobei die erfasste Information basierend auf einem Restwert einer internen Batterie der anderen Kommunikationsvorrichtung festgesetzte Information beinhaltet;
Bestimmen, ob eine spezifizierte Kommunikationsfunktion der anderen Kommunikationsvorrichtung aktiviert werden soll, basierend auf der erfassten Information; und
Übertragen eines Befehls unter Verwendung der Drahtloskommunikationseinrichtung zum Aktivieren der spezifizierten Kommunikationsfunktion nach einer Bestimmung des Bestimmens.

8. Computerprogramm, das bei Ausführen auf einem Device das Device veranlasst, ein Verfahren nach Anspruch 7 auszuführen.

9. Computerlesbares Speichermedium, auf dem ein Computerprogramm nach Anspruch 8 gespeichert ist.

## Revendications

1. Appareil de communication (101), comprenant :
un moyen d'acquisition (201) configuré pour acquérir des informations en provenance d'un autre appareil de communication (102) à l'aide d'un moyen de communication sans fil, dans lequel les informations acquises contiennent des informations qui sont définies sur la base d'une quantité restante d'une batterie interne dudit autre appareil de communication ;
un moyen de détermination (204) configuré pour déterminer s'il faut activer une fonction de communication spécifiée dudit autre appareil de communication sur la base des informations acquises ; et
un moyen de transmission (203) configuré pour transmettre, à l'aide du moyen de communication sans fil, une commande pour activer la fonction de communication spécifiée conformément à une détermination du moyen de détermination.

2. Appareil de communication selon la revendication 1, dans lequel :
les informations acquises contiennent des informations d'identification permettant d'identifier ledit autre appareil de communication, et
ledit moyen de détermination est configuré pour déterminer s'il faut activer la fonction de communication spécifiée selon que les informations d'identification acquises ont été précédemment stockées sur un moyen de stockage (205).

3. Appareil de communication selon la revendication 2, comprenant en outre un moyen de confirmation (207) conçu pour recevoir des informations en provenance d'un utilisateur de l'appareil de communication spécifiant s'il faut activer la fonction de communication spécifiée dudit autre appareil de communication, si les informations d'identification acquises ne sont pas stockées sur ledit moyen de stockage.

4. Appareil de communication selon l'une quelconque des revendications 1 à 3, dans lequel ledit moyen de détermination est en outre configuré pour déterminer s'il faut activer la fonction de communication spécifiée sur la base d'un processus devant être exécuté en coopération avec ledit autre appareil de communication.

5. Appareil de communication selon l'une quelconque des revendications 1 à 4, dans lequel :
les informations acquises contiennent des informations indiquant si la fonction de communication spécifiée est activée, et
ledit moyen de détermination détermine s'il faut activer la fonction de communication spécifiée, si la fonction de communication spécifiée n'est pas activée.

6. Appareil de communication selon l'une quelconque des revendications 1 à 5, comprenant en outre un deuxième moyen de communication (202) pour communiquer avec ledit autre appareil de communication après que la fonction de communication spécifiée a été activée,
dans lequel le deuxième moyen de communication est conçu de façon que la communication soit effectuée par l'intermédiaire de la fonction de communication spécifiée lorsque ladite communication est plus rapide que par l'intermédiaire dudit moyen de communication sans fil.

7. Procédé de commande destiné à commander un appareil de communication (101), le procédé consistant à :
acquérir des informations en provenance d'un autre appareil de communication (102) à l'aide d'un moyen de communication sans fil, les informations acquises contenant des informations qui sont définies sur la base d'une quantité restante d'une batterie interne dudit autre appareil de communication ;
déterminer s'il faut activer une fonction de communication spécifiée dudit autre appareil de communication sur la base des informations acquises ; et
transmettre, à l'aide du moyen de communication sans fil, une commande pour activer la fonction de communication spécifiée conformément à une détermination effectuée lors de la détermination.

8. Programme d'ordinateur qui, lorsqu'il est exécuté sur un dispositif, amène le dispositif à mettre en oeuvre un procédé selon la revendication 7.

9. Support de stockage lisible par ordinateur stockant un programme d'ordinateur selon la revendication 8.
